Europäisches Patentamt

European Patent Office

Office européen des brevets

(11) Publication number: **0 471 257 A2**

# EUROPEAN PATENT APPLICATION

(21) Application number: **91113056.5**

(22) Date of filing: **02.08.91**

(51) Int. Cl.5: **G06K 9/18**

(30) Priority: **03.08.90 US 563198**

(43) Date of publication of application:
**19.02.92 Bulletin 92/08**

(84) Designated Contracting States:
**DE FR GB**

(71) Applicant: **INTERFAX, INC.**
**320 Soquel Way**
**Sunnyvale, California 94086(US)**

(72) Inventor: **Baran, Paul**
**83 James Avenue**
**Atherton, CA 94025(US)**
Inventor: **Thompson, Archie L.**
**3550 Kettmann Road**
**San Jose CA 95121(US)**

(74) Representative: **DIEHL GLAESER HILTL &**
**PARTNER**
**Patentanwälte Flüggenstrasse 13**
**W-8000 München 19(DE)**

(54) **Dot constrained hand printed character recognition system and method.**

(57) A constrained character entry form for receiving hand printed characters suitable for machine reading with the form including a web for receiving hand printed characters, and printed on the web a countable number of preprinted constellations of at least three minimum sized visible dots arranged in columns and rows with each of the constellations having a height that is equivalent to the spacing between a column of three equally spaced dots to permit characters to be hand printed using substantially straight lines emanating from and terminating at two or more of said dots. The invention also includes a method for entering hand written characters into an automated character reading system.

The web is optically scanned to generate an electrical signal corresponding to markings on the web between each pair of adjacent dots within a constellation. Finally the signals are compared against a set of reference signals corresponding to a set of acceptable characters and a determination is made as to the closest matching character to the written character.

Fig. 1

This invention relates to hand printed character recognition'

## PRIOR ART

### Present Level of Performance

Commercial reading machines are available today which can read hand printed characters. The characters to be written are constrained to fit into light colored rectangular boxes. The present state of the art of such character reading is about 90 to 95% correct for individual characters. Machines to read unformatted (handwritten) zip codes, for example, on mail tend to reject 12 to 14% of those zip codes being read to produce a usable error rate. Thus, the reading of hand printed characters remains only a partially solved challenge at this time.

### Specific Environment

Reading hand printed characters from images that have been transmitted by CCITT Group 3 facsimile (fax) transmission (corresponding to a 8 x 4 pixels per mm resolution) constitutes a far more challenging task than reading images by a stand alone OCR machines. OCR reading forms are able to use preprinted color guide lines and boxes for position constraining alignment and character separation. The guidance boxes are kept from being confused with the characters being read by use of optical color filters within the reading machine. This is not feasible with a fax which is usually restricted to black and white image transmission only. Further adding to the difficulty of accurate reading is the irreversible process of scanning shades of grey into binary pixel elements by the fax process itself.

### Constrained Character Prior Art

There are many patents in the literature describing constraining characters. The closest art to the present invention that is known to the inventors is embodied in patents issued to R. G. Siegal; US Patents 4,132,976 and 4,275,381. The first patent cited shows a uniform preprinted network of open circles. Siegal teaches that characters can be written using a matrix of 3 x 3 circles. Characters are written to start and end within these circles with these characters being detected by noting the absence or presence of markings within each circular junction area. Marks falling within the circles are detected and treated as binary digits with that set of binary digits being treated as a binary word. In turn each such detected binary word is converted to an estimated character. In Siegal's second patent he adds four additional circles to be used around the center circle, for a total of 13 junction areas. Siegal removes the shape constraint of the character by only examining the junction areas. Siegal's inventions focus solely upon the junction areas and not the interconnecting line segments. In fact, Siegal's form could be used by only coloring in selected circles to form the desired character.

When fax is used it is particularly difficult to determine with certainty whether marks have been made within each circle, or if the marks are an artifact of the course digital fax scanning process of the circles themselves.

### Unconstrained Character Prior Art

There is extensive literature in the field of hand printed character recognition where the characters are not constrained. The process of character recognition may be factored into three phases: preprocessing, recognition and post processing.

### Preprocessing

Variation of characters size, position, alignment and/or appearance impair the recognition process. Preprocessing approaches seek to reduce character to character variations.

### Recognition

The recognition stage matches each unknown character against the set of allowable characters. A very wide variety of different recognition approaches are found in the literature. These may be grouped into: 1) feature recognition such as shapes or branch points, 2) entire matching of a character against a position based stencil (sometimes called template matching), or 3) a combination of both types of approaches.

A range of different recognition algorithms are found in the patent literature. Some algorithms assume the use of "perfect models" of the character to be recognized. Others train against a set of "real world" samples. The most recent vogue is the use of neural networks training against a set of samples. One charm of neural networks is that by simply training they allow operation without having to understand the rationale for the separation factors. The negative factors include a very long training cycle, and sometimes a long recognition process where the recognition algorithm is attempted solely in software.

### Post Processing

Lastly, is the post processing phase of character recognition. Here outside additional context information is used such as the expected frequencies of each of the characters being read, or such other a priori known constraints.

## Desired System

It would be desirable to reduce the error rate in reading hand written characters considerably from the current error rates which are marginally acceptable.

This object is solved by providing a constraint character entry form according to one of independent claims 1, 10 and 15, a method of machine reading hand written characters according to independent claim 16 and a constraint character recognition system or apparatus according to independent claim 20 or 21.

Further advantageous features, aspects and details of this invention are evident from the dependent claims, the description and the drawings. The claims are understood as a first non-limiting approach at defining the invention in general terms.

By means of the invention the written characters are constrained to reduce reading errors. Specifically this invention relates to the reading of characters formed by connecting dots in a constellation of preprinted dots. The present invention is particularly useful where hand printed chracters are subject to noise and distortion such as where hand printed characters are to be transmitted by facsimile.

The present invention represents a significant improvement over alternative approaches.

In accordance with the preferred embodiment of the present invention, the form of each character to be drawn is facilitated by providing a preprinted constellation of dots. More specifically the constellation gives a guidance for forming characters by connecting the dots together with substantially straight lines. The writing is such constrained by an array of dots and optional spacing lines forcing each separate character to be drawn substantially the same way, i.e. the same size and shape. Such constraints are equivalent to a de facto preprocessing stage, serving the same function.

While one form of the entry form according to this invention uses a set of 3 x 3 markings, the approach used is very different from that disclosed by Siegal in his patents that have been referenced above. The difference is that the character definition of the present invention is provided, not by marks contained within junction point circles as in Siegal, but rather by the straight line segments away from the reference points that connect the dots of interest. As will be discussed more completely below, it is impossible to use the Siegal approach in fax applications. The reason is that the position indicating markings at the junction points, such as the dots or circles, are picked up by the fax process and included in the reading of the characters. This clearly adds extraneous information in the document received by the fax server.

Fig. 1 shows the layout of a sheet to accept hand printed characters using a nine dot matrix field.

Fig. 2 shows the set of numeral characters 0 through 9, written using the nine dot matrix of Fig. 1.

Fig. 3 shows a set of upper case alphabetical characters written using the nine dot matrix of Fig. 1.

Fig. 4 show several alternative ways of writing several characters.

Fig. 5 shows one possible modification to either or both the alpha or numeric character sets to allow both to share a common mixed alpha and numerals writing field.

Fig. 6 shows the 9-dot field used to record lower case characters.

Fig. 7 shows that a 6-dot character set is also feasible.

Fig. 8 shows the use of an 8-dot field.

Fig. 9 shows that eliminating the separator bars allows the intermixing of 6 and 9-dot characters.

Fig. 10 shows that alternative formation of characters can be done using either 6 dot or 9 dot patterns.

Fig. 11 shows one organization of the bar separated 9-dot field.

Fig. 12 shows sixteen bar segment areas used to differentiate characters in the 9-dot field embodiment of the present invention.

Fig. 13 shows the letter "K" drawn on a nine dot matrix field with the bar segment areas of Fig. 12 superimposed thereon to illustrate the detection of the drawn letter by the present invention.

Fig. 14 is a flow chart that describes how post processing the character reading is used to improve the overall reading accuracy.

Fig. 15 is a schematic block diagram of a FAX transceiver connected to a FAX server for reading handwritten characters recorded in each matrix field of a character entry sheet of the present invention after receipt by the FAX server.

Fig. 16 is a schematic block diagram of an illustrative system for directly reading handwritten characters recorded in each matrix field of a character entry sheet of the present invention.

Fig. 17 is a flow chart illustrating one method of the present invention for reading information entered on a character entry sheet of the present invention.

## DESCRIPTION OF THE PREFERRED EMBODIMENT

The objective specifically is to make all hand printed characters look identical and thus ease the recognition process. More specifically the objective is to remove as many of the variable factors of hand drawn characters as possible, especially those factors that contain relatively little differentiation information, such as size variations, thickness of line, etc.

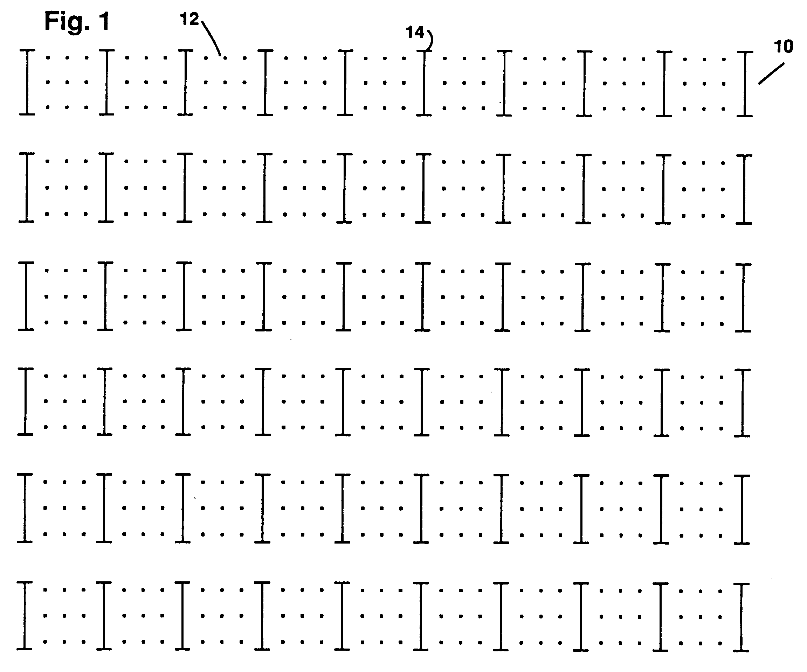

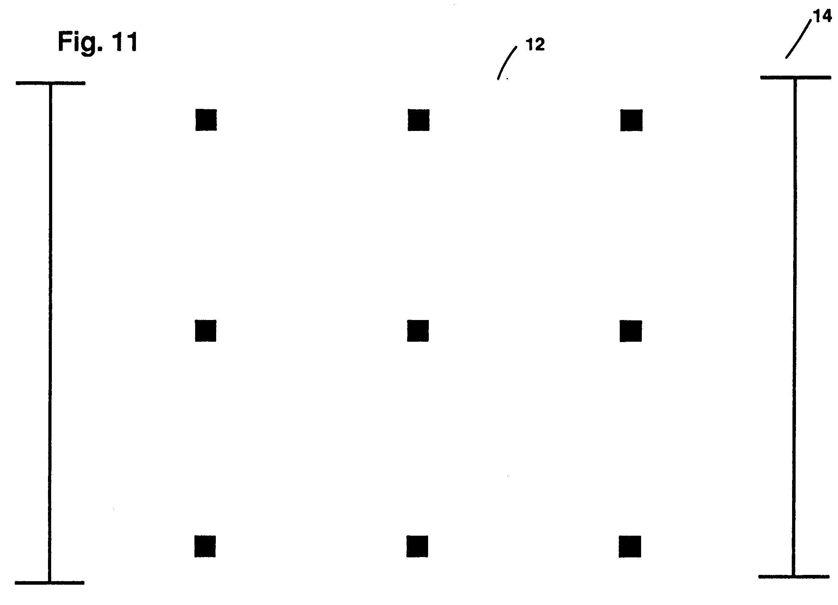

Referring to Figs. 1 and 11 there is shown a first embodiment of a character entry sheet 10 to accept hand printed characters using a nine dot matrix field 12 for each character.

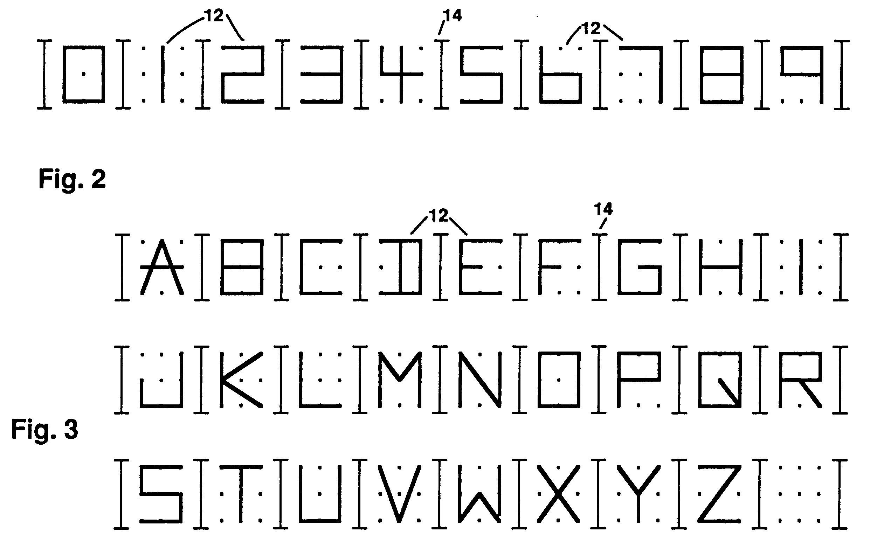

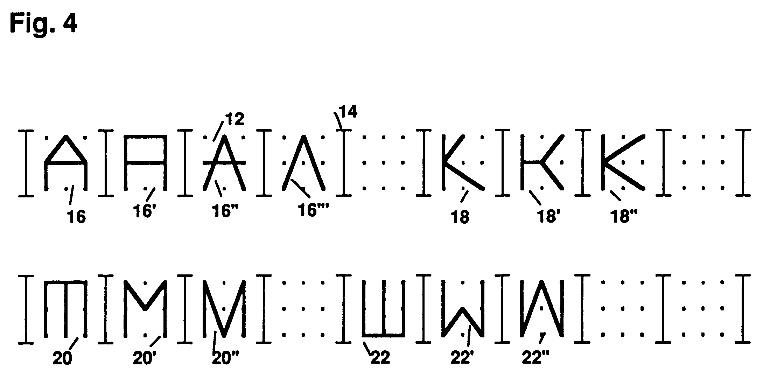

As shown in Figs. 2 and 3 the user is to draw all characters within the individual dot matrix fields 12 with straight lines, each line starting at a dot and ending at a dot. The "I" bar shaped field separators 14 are provided to assist in the alignment of the character fields to facilitate reading of, the characters. Field separators 14 are fiduciary markings that are provided to align and normalize the reading process of the handwritten characters recorded in each of the matrix fields 12 to correct for horizontal and vertical shifts, size expansions and rotations during the reading, copying or transmitting process.

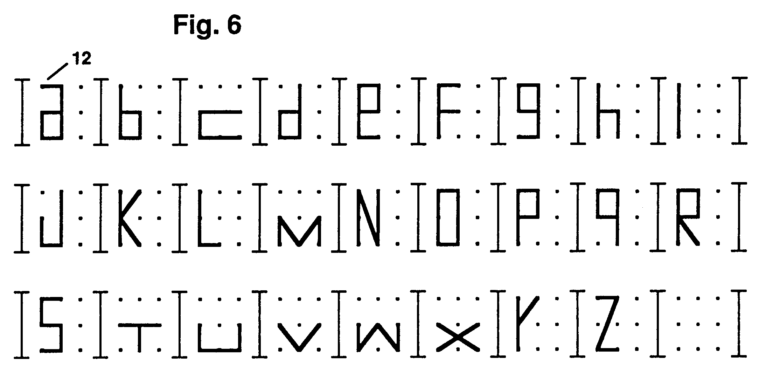

Figs. 2 and 3 further show a sample of the numerals 0 through 9 and capitalized alphabetic characters recorded in nine dot matrix fields 12, respectively. In each of these figures it can be seen that with the exception of the numeral "1" and the letter "I", each character spans the full 3x3 matrix size of the field 12. For the characters "1" and "I", they are simply drawn as vertical line segments that span the full height of the center of field 12. "1" (24') and "I" (26) could also be drawn to span the full 3x3 matrix of the present invention as shown in Fig. 5.

These character sets can be used where only all numerals or all alphabetic characters are required without confusion between several of the numerals and alphabetic characters. If the character sets of Figs. 2 and 3 are used together something has to be done to avoid confusing numerals 0, 1, 5 and 8 with alphabetic characters O, I, S and B, respectively.

In some applications, such as a space to accept a telephone number (no alphabetic characters allowed), ambiguity between those numerals and alphabetic characters is automatically avoided. A sample set of each character could be shown in practice, so that the inexperienced user is instructed as to how to draw each character.

At the other extreme it is possible to minimize the constraints on use thus allowing the user to form each of the hand printed characters in any manner that they wish. This is possible because in practice there is only a limited number of ways that each character can be drawn as a separate symbol given the number of dots in the matrix field 12, no matter how imaginative the writer. A post processing step then maps each of the allowable symbols into the character set. For example, if there are three different allowable ways of drawing a "6" each would be outputted as a "6".

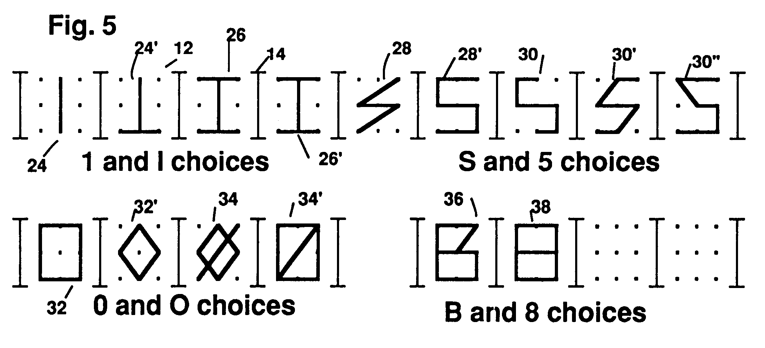

Fig. 4 shows a selection of alternative potential forms for the letters "A" (16), "K" (18), "M" (20) and "W" (22) using the nine dot matrix field 12 of the present invention. During the post processing phase each alternative symbol is defined as the same character. The illustration here is not intended to be inclusive, only representative as there are many alternative ways to write some characters. As long as the writer follows the rule of always starting and ending each line segment of the character at dots, the reading system should be able to determine the written character.

Similarly, Fig. 5 shows potential ways to distinguish the numeral "1" (24) from the letter "I" (26), the letter "S" (28) from the numeral "5" (30), the letter "O" (32) from the numeral "0" (34), and the letter "B" (36) from the numeral "8" (38).

Fig. 6 shows a way to implement lower case alphabetic characters to distinguish them from the upper case alphabetic characters using the nine dot matrix field 12 of the present invention. For each of the lower case characters, with the exception of the letter "i", each character is confined to either the left most or lower most 2x3 portion of the 3x3 field. The lower case letter "i" is confined to the left most 1x3 portion of the 3x3 field.

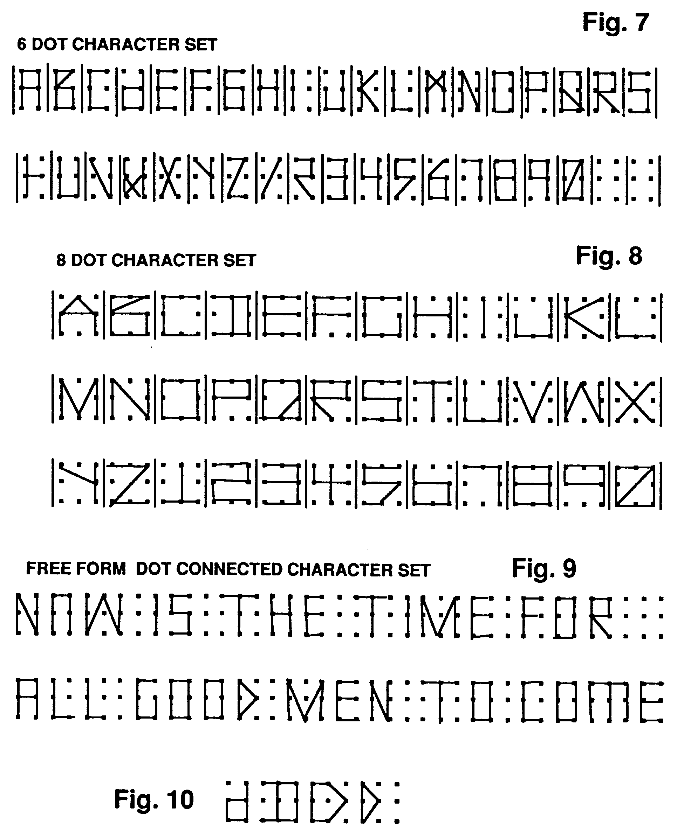

There are many variants of the present invention. Two of those variants are illustrated in Figs. 7 and 8 where the matrix fields for the characters use 6 and 8 dots, respectively. Other numbers of dots can be used as well.

The embodiment shown in Fig. 9 is probably the most practical. Here the number of dots used by each character may be intermixed depending upon the character being drawn. This provides the most flexible of all writing arrangements and allows the writer maximum freedom of choice of the formation of characters. Most of the upper case characters can be drawn using 6 dots and one using 3 dots, while a few characters can be better drawn using a 9 dot matrix. Further, a two dot, or greater, spacing between characters allows separation of letters into words where no field separators are used.

Fig. 10 is included to illustrate several different configurations for the letter "D" using 6, 8 or 9 dot configuration matrices.

While the present invention typically uses a set of 3 X 3 or 2 X 3 markings, the character definition of the present invention is determined by, detecting the straight line segments that connect the dots of interest rather than which dots those line segments intersect. In the prior art the detection was done solely at the junction points and that presents problems when the document is transmitted by fax and the receiving fax is trying to determine which character is drawn in a particular location on the received document. The problem is that the position indicating markings at the junction points, such as the dots or circles, tend to also be transmitted by the fax process adding extraneous information and they appear to be part of the received character when the character is read by the receiving fax server.

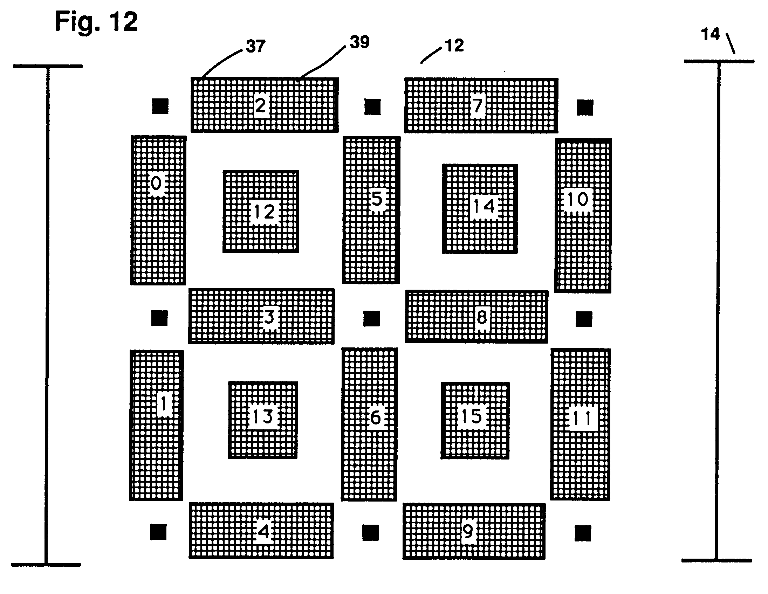

Fig. 12 shows the detector field locations numbered 0-15 where the present invention looks for segments of the drawn character, thus avoiding the extraneous information that might be provided by the transmission of the connector dots. The detector field location outlines are not printed on the character entry sheet; they are merely superimposed on the sheet to show the regions scanned by the present invention to determine the character in the field. There are no detector field outlines on the form that can be transmitted by fax. Each of locations 0-15 only include a portion of a line segment when a character is drawn in the field.

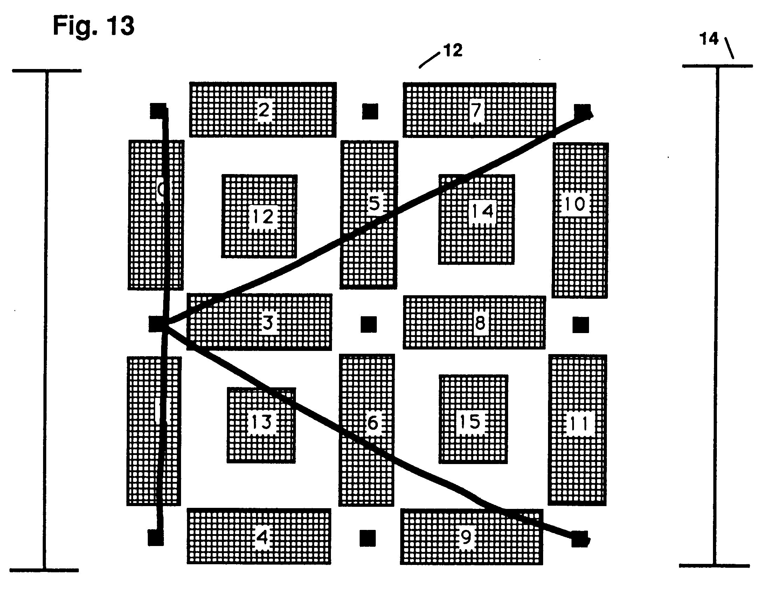

In Fig. 13 the letter "K" has been drawn in the field with the detector field locations 0-15 superimposed thereon to illustrate the detection process of the present invention. Thus, a ROM can be provided to correlate the identified locations with one of the allowable characters. As seen with relation to Fig. 13 there may be more than one combination of detector field locations for each character. Further, if the detected locations are not included in the expected groups of locations for the expected characters, there may have been a stray mark in an additional location. In that situation, one location can be dropped from the group to determine if a combination results that is identifiable as an acceptable character. Additionally, if the possible combinations of detector locations that are potentially identifiable for one character can also be included among the possible combinations for another character, the size of the detector locations can be reduced to eliminate this potential double identification confusion. Since the size of the matrix field in which the character is to be drawn is relatively small, the line segments drawn will be relatively straight and less likely to be curved which will result in fewer combinations of detection locations being possible for each potential character.

There are two rules for the writer to follow when printing characters when using the present invention: 1) restrict the formation of such characters to straight line segments with 2) each straight line segment starting and terminating at a dot point. By following these two rules, each character drawn will have substantially the same size, form, and alignment irrespective as to who drew the character. The only significant additional degree of freedom not removed is the width of the line segments drawn by the writing instrument used to draw the characters. The line width information may be removed during the preprocessing stage if desired.

To further reduce the detection error, a sample of allowable characters can be advantageously preprinted nearby the blank matrix fields 12 for the character writer's guidance.

Two major approaches to character reading found in the literature include feature recognition and template matching. Template matching is the simplest of all techniques. In template matching, each examined character is compared against a set of templates of the set of all possible characters. While template matching is the simplest of all the matching techniques it requires nearly perfectly formed characters to work well. Hand printed characters tend to be highly different from sample to sample and not normally amenable to simple template matching approaches.

The state of the art of reading hand printed characters produces error rates on the order of 5 to 10 percent. To achieve higher rates it is necessary to constrain the characters to minimize the differences between different samples of the same character. The present invention achieves nearly perfect performance by guiding the formation of hand printed characters to form characters that are essentially identical regardless of the writer. All characters will appear to be written by the same writer. And, it does so in a manner that lends itself to a wide range of different recognition algorithms.

In the present invention a number of different character determination techniques have been tried for the recognition process including adaptive training, neural networks and relatively simple template matching. All have been found to work with this invention.

In the case of facsimile, characters are transmitted as a set of pixels -- about 4 pixels per mm in height and 8 pixels per mm in width. A 1 cm x 1 cm character would occupy about 80 pixels in height and 40 pixels in width. The character would then form a matrix of 3200 cells to be compared by any one of a number of different methods, such as neural networks.

To increase the speed of the reading process it is possible to use a shortcut process. Namely, dividing the matrix of cells into a number of detector field locations as shown in Figure 12. Each drawn character is determined by examining the percentage of the pixels within each of the detector field locations. Since there is a large variation in the choice of writing instruments, varying from a sharp pointed #5 pencil to a heavy black marking pen, it is desirable to normalize the ink density in expected patterns. This is done by counting the total number of black pixels in each detector field location.

Next the number of black pixels in each detector field location is computed. The percentage of the inked pixels in each of the 16 detector field locations is used in lieu of the absolute count. If the percentage of pixels in any field location is found to be above a threshold value, then the set of all such above-threshold field locations that appear to include a mark are fed to a ROM or other lookup table arrangement. While this approach reaches unambiguous conclusions for well made characters that always cut across the same set of detector field locations, other combinations can be ambiguous. For example, in Fig. 13 the marked black line of the character "K" grazes locations 3, 13, 14, 7 and 9, and, could easily be drawn to include segments 10 and 11. Here, a probablistic matrix pattern comparator such as described by Baran and Estrin (1960) "An Adaptive Character Reader", the Rand Corp., or one of the more recent neural network approaches. The advantage of this described approach is that the number of inputs is reduced from 3200 cells to 16 detector field locations. This greatly simplifies the amount of computation required by the comparison arrangement and hence increases the speed of the recognition process. A large set of samples --several thousand or more characters -- are to train the processor. The more samples, the more likely the system will be able to recognize unusual ways of writing a character.

A key point is that the detector field locations avoid including the areas near the position reference dots of the matrix, which contain very little information. Rather the information is contained in the detector field locations away from the reference dots.

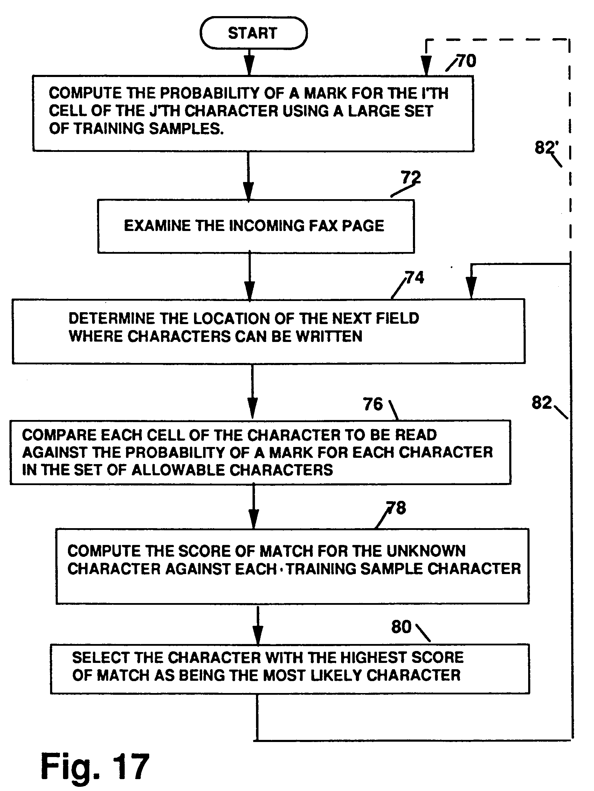

Fig. 17 is a flow diagram that illustrates a character recognition method of the present invention. Initially the look-up table for character recognition is built (block 70) using as many variations of forming the acceptable characters as are available. Next, the page containing the characters to be read is examined (block 72). In this figure it is assumed that the recognition is being done after the page is transmitted by fax. A similar approach would be used for the direct examination of the document containing the hand written characters. The examination step is followed by orientation of the page for reading the characters written thereon (block 74). This is done by any of a number of techniques such as identifying the fiduciary field separator symbols and aligning the detector with respect thereto. Next each of the detector field locations (see Fig. 12) are examined to determine if a portion of a character crosses each of those locations (block 76). Then, the result of that examination is compared against the training sample characters stored within the look-up table and the various possible matches are scored (block 78). The final step is then to select the character with the highest score as the likely match (block 80). Control is either returned to block 74 via line 82 to read the next character, or alternately to block 70 via line 82' to add an additional training sample to the look-up table if there was not an actual match at block 78 before advancing to block 74 to read the next character.

Each detector field location is examined separately, and a determination is made whether the detector field location is crossed by a line segment or not. The set of detector field locations is then matched against all valid combinations of allowable characters. The number of black pixels in each bar segment field is counted to determine whether a detector field location is crossed by a line segment or not. A cumulative tally is made of the total number of pixels in all detector field locations is made. The division of the number of pixels in each of the detector field locations, divided by this cumulative pixel count has the effect of line width normalization or removing the effect of pencil line thickness. Rather than a simple binary comparison, the percentage of back pixels found in each detector field location reduces the variability caused by different pen or pencil line widths.

An embodiment of the reading process of the present invention is in a fax machine input arrangement wherein the recognition of handwritten characters is performed at a remote fax server. This allows an automatic "machine readable" data capability using any existing fax machine. The image of a page containing fields that can receive hand printed characters is transmitted via fax to a remote server where the actual recognition takes place. When the fax server is unable to read the information correctly it requests additional information by faxing back the sheet containing the suspected errors. This hand print reading capability allows information retrieval from remote computers, and to route facsimile messages within a large organization using a shared local area network. The general concept of the use of remote character recognition is described in US Patent #4,893,333, entitled "Interactive Facsimile System And Method Of Information Retrieval" which is assigned to the same assignee as the present invention.

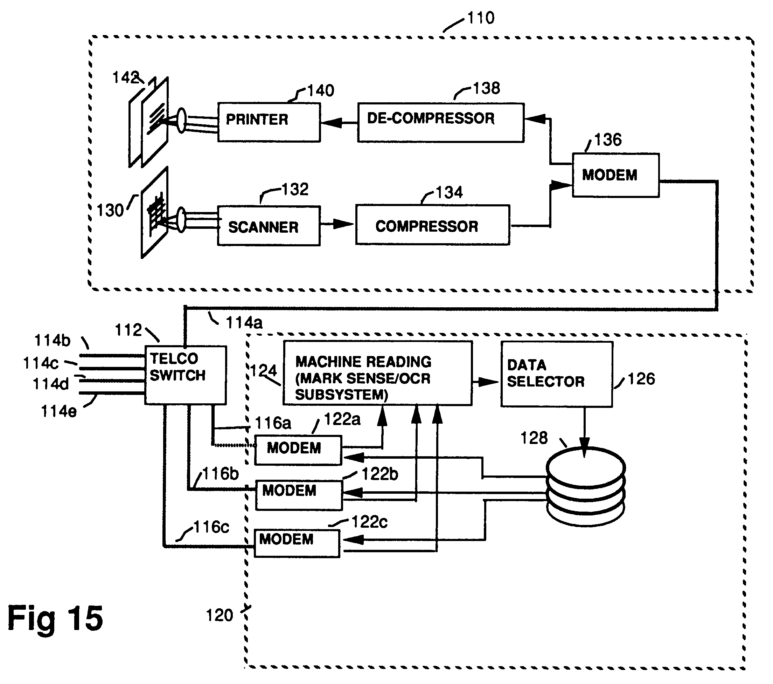

Referring to Fig. 15 there is shown three major blocks in an overall system block diagram: a FAX transceiver 110; a telco switch 112; and a shared FAX server 120. FAX transceiver 110 is representative of conventional FAX transceivers and is provided for the requester to request and receive copies of selected information that is prestored in a shared FAX server 120. In a multiline environment, typical of the present invention, the telco switch 112 (telephone company switching equipment) interconnects one or more FAX transceivers 110 via lines 114a-114e to a plurality of input lines 116a-116c of FAX server 120. The multiple line system is the most efficient application for the present invention, however, the concept is equally applicable to a single line system.

The typical FAX transceiver 110, as shown in Fig. 15 includes a scanner 132 for reading a document 130 and formatting the information therefrom in a graphical electronic format, pixel by pixel, line by line. The graphically formatted signal is then transferred from scanner 132 to data compressor 134 before being applied to modem 136 for transmission to telco switch 112 and server 120. Modem 136 also functions to receive a signal from server 120 via a telco switch 120. The received signal is transferred from modem 136 to data decompressor 138 where the received signal is decompressed before being transferred to printer 140. Printer 140 in turn converts the electronic signal received by it to a format for printing the data encoded in the electronic signal on media 142.

Fig. 15 further shows that shared FAX server 120 includes modems 122a-122c which communicate with lines 116a-116c of telco switch 120. Internally, each of modems 122a-122c is connected to transfer the incoming signal to the machine reading (mark sense/OCR) system 124. The output signal from the machine readable system 124 is then coupled to data selector 126 where the addresses for other desired information are decoded. The decoded addresses are then coupled to disk memory 128 where the desired data has been previously stored in compressed form by known techniques. The selected data is then transferred from disk memory 128, to the appropriate modem 122a-122c from which the information was requested, for transmission to the requestor via the associated line 116a-116c.

The FAX transceiver 110 optically scans each page to be transmitted, converting the input raster image into a compressed format as described in CCITT Recommendation T.4 for the Group 3 FAX transceivers. The digital output signal modulates a CCITT V.29 modem 136, which operates at 9600/7200/4800/2400 bits per second, depending upon the line quality encountered during the call. The standard V.29 modem used in facsimile systems is a half duplex device. Signals are first sent in one direction between the facsimile transceiver and the server 120. Alternatingly, this direction of data flow is reversed to allow reception of "hand shaking", or coordinating signals, and thence image transmission in accordance with the T.30 Recommendation.

Images are sent in T.4 Recommendation compressed format, so that it is necessary to expand the image into a full raster for printing at the FAX transceiver 110. The FAX server 120 is shown interfacing with a bank of V.29 modems 122a-122c to simultaneously support multiple FAX transceivers 110. However, only a single modem is required for single line operation. (In the case of Group 4 machines, this termination could occur at 64 Kilobit/sec or other speeds.) A shared machine reading system 124 operates upon the received signals, senses the markings on a selector sheet electronically from a bit map of the selector sheet, and interprets the user markings on each selector sheet page. The value of these markings are translated into data commands to determine the locations of the stored data to be retrieved and sent to the calling FAX transceiver 110. In the interest of data storage economy, this information is preserved in compressed format, and need not be expanded at the time of transmission.

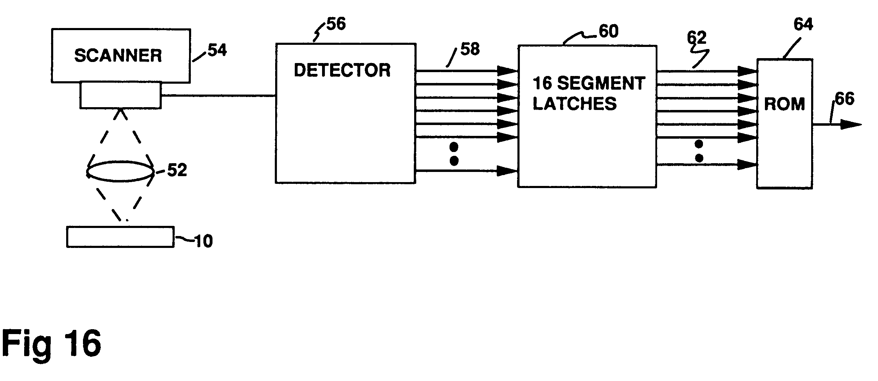

To read a character entry sheet 10 directly, as opposed to being read after it is transmitted by a first fax to a second fax, one could use a system such as that shown in Fig. 16. Character entry sheet 10 is placed beneath lens 52 through which it is scanned by a photosensitive scanner 54. Scanner 54 initially locates an individual character field using field separators 14, if they are present, or the individual connector dots of the character matrix. Scanner 54 then scans the detector field locations to determine if there is a mark in each detector field location, individually. This information is passed on to detector 56 where the color density of the location is integrated with the background color of sheet 10. If the resultant value at the individual location exceeds a preselected threshold level, the location is identified has containing a portion of a character entered on sheet 10. A digital signal is then generated for each detector field location by detector 56. Those digital signals are then transferred to latch 60 where they are held to form the address for a look-up table ROM 64 to determine which character is in each location on sheet 10.

One application of the present invention is the use of telephone numbers written on an input paper sheet to identify the calling facsimile machine. With additional post processing of the character information, as described below, the present invention allows very high accuracy automatic detection of the calling fax transceiver's telephone number with even highly imperfect hand printing.

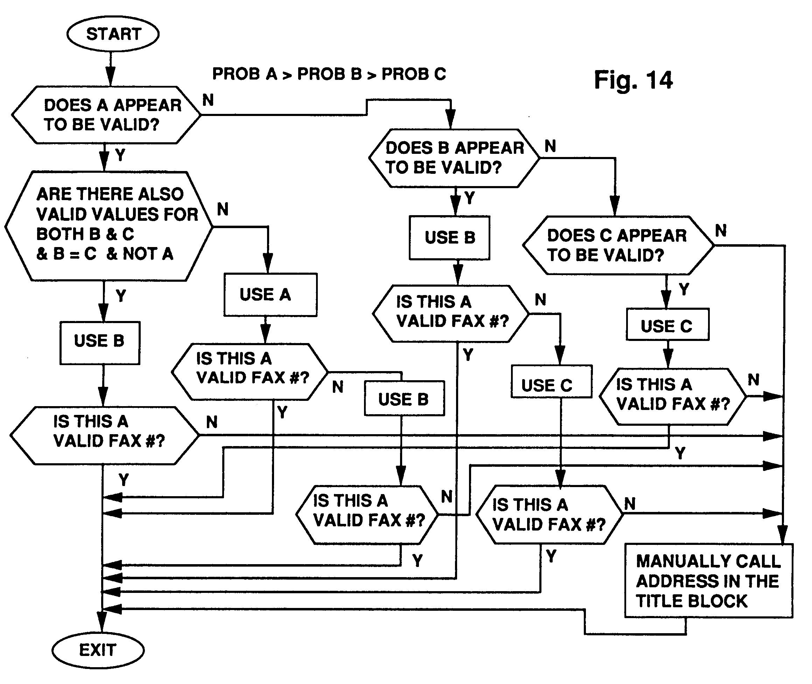

In this case the number to be read is the fax telephone number of an incoming fax message requesting information from an automatic fax server. Information about the source of the incoming fax call can be derived from several different but imperfect sources as shown in the flow chart of Fig. 14. These include:

A = the telephone number characters as used in the present invention as initially read by the fax server (which may be in error).

B = the telephone number as received by the telephone system automatic number identification (ANI) system (which is not always present and not always correct).

C = the telephone number found within the calling station fax machine (Calling Station Identification or CSID) which is usually incorrect.

The flow chart of Fig. 14 uses the redundancy of information to correct any reading errors so that very few fax messages cannot be read. And, if that occurs then the system kicks the message out for manual reading. Thus the overall reading accuracy is extremely high, even for users not precisely following the assigned start at a dot and end at a dot rules. This is shown to demonstrate the general concept of post-processing to increase the accuracy to levels needed for extreme reliability for users that do not always follow the rules.

While the formation of characters written using solely straight line segments and their automatic reading, is described, minor variations of this approach are within the scope of the present invention. For example, characters can be identified where the writer had been permitted to write some characters using some curved lines as well as straight lines. In this case the dot locations would be interpreted as general guidance markings, and not as mandatory start-stop locations to allow the writer a greater degree of freedom, albeit with some acceptable loss of reading accuracy compared to the earlier approach described.

Similarly, other means may be used to recognize the characters such as template matching using multiple pixel locations, or of feature recognition either on a deterministic basis or a probabilistic neural network basis. The heart of the invention resides in the use of the fiduciary position of the characters to allow their more effective recognition and the use of dots as start and stop locations for the straight line segments of most characters.

Under test, using the present invention, 449 out of 450 sample hand printed numerals were correctly identified for an accuracy rate of about 99.8%. This improvement over the prior art is attributable to the constraining the writing of characters, in a manner so that all characters, regardless of who drew the characters, all appear to be written by the same person.

## Claims

1. A constrained character entry form (10) for receiving hand printed characters suitable for machine reading, said form comprising:

a web for receiving said hand printed characters thereon; and

a countable number of preprinted constellations (12) of at least three minimum sized solid dots arranged in columns and rows with each of said constellations (12) having a height that is equivalent to the spacing between a column of the at least three equally spaced dots to permit characters to be hand printed using substantially straight lines emanating from and terminating at two or more of said dots.

2. A constrained character entry form as in Claim 1 wherein each constellation (12) has at least two columns with each column having at least two and preferably at least three dots that define the full height of the column.

3. A constrained character entry form as in Claim 1 or 2, wherein each constellation (12) has two columns in width each of at least three equally spaced dots in height.

4. A constrained character entry form as in claim 1 or 2 wherein each constellation (12) has three columns in width each of at least three equally spaced dots in height.

5. A constrained character entry form as in claim 1 or 2 wherein each constellation (12) has four columns each of at least three equally spaced dots in height.

6. A constrained character entry form as in claim 1 or 2 wherein each constellation (12) has three columns, first, second and third columns in that order, each of said columns having a height equivalent to the spacing between a column of three equally spaced dots with said first and third columns containing three dots and said second column having two dots, one at the top of the column and another one at the bottom of the column.

7. A constrained character entry form as in claim 1 wherein each constellation includes a plurality of columns each having three equally spaced dots for recording characters using at least one column per character.

8. A constrained character entry form as in one of the preceding claims, wherein at least one blank column is left between selected characters to separate messages.

9. A constrained character entry form as in one of the preceding claims wherein at least one blank column is left between selected characters to separate words.

10. A constrained character entry form as in one of the preceding claims further including fiduciary markings (14) in registration with said constellation (12) of dots to allow precise position referencing of each constellation.

11. A constrained character entry form as in one of the preceding claims further including designations for delineating some of said constellations for the acceptance of numerals and some for the acceptance of other characters.

12. A constrained character entry form as in one of the preceding claims wherein some constellations are reserved for accepting numerals, while other constellations are reserved for accepting alphabetic characters.

13. A constrained character entry form as in Claim 1 wherein:

   each of said constellations have nine dots in rows and columns of three dots each;

   lower case characters are constrained to the left most or lower most six dots in said nine dot constellation; and

   upper case characters are the full height and occupy at least the center vertical column of said nine dot constellation.

14. A constrained character entry form for receiving hand printed characters suitable for machine reading, said form comprising:

   a web for receiving said hand printed characters thereon; and

   a countable number of preprinted constellations each of only two columns in width, each column having at least three minimum sized visible dots arranged in columns and rows, with each of said constellations having a height that is equivalent to the spacing between a column of three equally spaced dots to permit characters to be hand printed using substantially straight lines emanating from and terminating at two or more of said dots.

15. A constrained character entry form for receiving hand printed characters suitable for machine reading, said form comprising:

a web for receiving said hand printed characters thereon; and

a countable number of preprinted constellations each being at least four columns in width with each column having three minimum sized visible dots arranged in columns and rows, each of said constellations having a height that is equivalent to the spacing between a column of three equally spaced dots to permit more than one character to be hand printed within the same constellation using substantially straight lines emanating from and terminating at two or more of said dots using one or more columns to draw said character.

16. A method for machine reading hand written characters, especially for use in the constraint character recognition system according to one of the preceding claims, which characters consist of preferably substantially straight lines emanating from one dot and terminating at another dot of each of a countable number of constellations preprinted on an entry form, said constellations consisting of at least three minimum sized visible dots arranged in columns and rows with each of said constellations having a height equivalent to the spacing between a column of three equally spaced dots, the method comprising the steps of:
   (a) optically scanning said web;
   (b) generating an electrical signal corresponding to markings on said web between each pair of adjacent dots within a constellation; and
   (c) comparing said signals of step (b) against a set of reference signals corresponding to a set of acceptable characters and determining the closest matching character to the written character.

17. A method as in claim 16 wherein step b includes the steps of:
   (d) transmitting an electrical signal corresponding to the markings in said web to a remote receiver, and
   (e) receiving said electrical signal and converting said received electrical signal to individual electrical signals that correspond to markings on said web between each pair of adjacent dots within a constellation.

18. A method as in claims 16 or 17, further including the step of:
   (f) training said set of reference signals to include alternative ways of drawing each of said acceptable characters.

**19.** A method as in one of claims 16 to 18, wherein each constellation of the entry form is set up according to the features described in one of claims 2 to 12.

**20.** A constraint character recognition system or apparatus for receiving hand written characters and machine reading same preferably for use in facsimile transmission comprising:

(a) an entry form wherein a web for receiving said hand written characters comprises a countable number of preprinted constellations (12) of at least three minimum sized visible dots arranged in columns and rows with each of said constellations (12) having a height that is equivalent to the spacing between a column of three equally spaced dots;

(b) optically scanning means;

(c) means for generating an electrical signal corresponding to markings on said web in a recognition are between each pair of adjacent dots within a constellation;

(d) comparator means for comparing said electrical signals achieved from the generating means with a set of reference signals corresponding to a set of acceptable characters and determining the closest matching character to the written character.

**21.** A constraint character recognition system or apparatus according to claim 20 wherein said recognition areas are small enough to be separated from the dots so as to not include said dots and the region immediately surrounding said dots.

**22.** An apparatus or system for automated character reading of hand written characters from a web having a countable number of preprinted constellations of at least three minimum sized solid dots arranged in columns and rows with each of said constellations having a height that is equivalent to the spacing between a column of three equally splaced dots to permit characters to be hand prined as lines emanating from and terminating at two or more of said dots, said apparatus comprising:

means for optically scanning said web,

means for generating an electrical signal corresponding to markings on said web in a recognition area between each pair of adjacent dots within a constellation, said recognition areas being small enough to be separated from said dots so as to not include said dots and the region immediately surrounding said dots, and

means for comparing said signals from each of said recognition areas against a set of reference signals corresponding to a set of acceptable characters and determining the closest matching character to the written character.

**23.** An apparatus or system as in one of claims 20 to 22 wherein:

said web further includes fiduciary markings in registration with said constellations of dots; and

said apparatus further comprises means for detecting said fiduciary markings for use by said signal generating means to allow precise position referencing of each of said recognition areas.

**24.** An apparatus or system as in one of claims 20 to 23, wherein

said optical scanning means includes a facsimile transceiver, and

said signal generating means includes a facsimile server.

**25.** A constraint character recognition system or apparatus according to one of claims 20 to 24 wherein said scanning and generating means when reading attributes a matrix of cells to each constellation.

**26.** A constraint character recognition system or appratus according to claim 25, wherein said matrix of cells does not cover the location of the dots in the entry form.

**27.** A constraint character recognition system or apparatus according to claim 25 or 26, wherein said matrix of cells is divided into a number of detector field locations.

**28.** A constraint character recognition system or apparatus according to one of claims 25 to 27, wherein the matrix of cells is divided into separate detector field locations, one a detector field location extending between each two adjacent dots in a row and each two adjacent dots in a column and one detector field location situated in the free space encircled by a pair of adjacent row detector field locations of adjoining rows and a pair of adjacent column detector field locations of adjoining columns, especially according to Figure 12.

**29.** A constraint character recognition system or apparatus according to one of claims 20 to 28, wherein each constellation of the entry form is set up according to the features described in one or more of claims 2 to 12.

**30.** A constraint character recognition system or apparatus according to one of claims 20 to 29 further comprising means for displaying or reproducing the read characters.

Fig. 1

EP 0 471 257 A2

Fig. 2

Fig. 3

Fig. 4

EP 0 471 257 A2

**Fig. 5**

1 and I choices

S and 5 choices

0 and O choices

B and 8 choices

EP 0 471 257 A2

**Fig. 6**

**Fig. 7**

**6 DOT CHARACTER SET**

**8 DOT CHARACTER SET**  **Fig. 8**

**FREE FORM DOT CONNECTED CHARACTER SET**  **Fig. 9**

**Fig. 10**

17

Fig. 11

Fig. 12

Fig. 13

Fig. 14

PROB A > PROB B > PROB C

Fig 15

EP 0 471 257 A2

**Fig 16**

EP 0 471 257 A2

START

COMPUTE THE PROBABILITY OF A MARK FOR THE I'TH CELL OF THE J'TH CHARACTER USING A LARGE SET OF TRAINING SAMPLES. — 70

EXAMINE THE INCOMING FAX PAGE — 72

DETERMINE THE LOCATION OF THE NEXT FIELD WHERE CHARACTERS CAN BE WRITTEN — 74

COMPARE EACH CELL OF THE CHARACTER TO BE READ AGAINST THE PROBABILITY OF A MARK FOR EACH CHARACTER IN THE SET OF ALLOWABLE CHARACTERS — 76

COMPUTE THE SCORE OF MATCH FOR THE UNKNOWN CHARACTER AGAINST EACH · TRAINING SAMPLE CHARACTER — 78

SELECT THE CHARACTER WITH THE HIGHEST SCORE OF MATCH AS BEING THE MOST LIKELY CHARACTER — 80

82'

82

# Fig. 17